(19) Europäisches Patentamt
European Patent Office
Office européen des brevets

(11) EP 1 189 998 B1

(12) **EUROPÄISCHE PATENTSCHRIFT**

(45) Veröffentlichungstag und Bekanntmachung des Hinweises auf die Patenterteilung:
**29.09.2004 Patentblatt 2004/40**

(21) Anmeldenummer: **00929506.4**

(22) Anmeldetag: **06.05.2000**

(51) Int Cl.[7]: **C09D 5/04**, C08G 18/38, C08G 18/75, C09D 175/04, C08G 18/62

(86) Internationale Anmeldenummer:
**PCT/EP2000/004082**

(87) Internationale Veröffentlichungsnummer:
**WO 2000/071625 (30.11.2000 Gazette 2000/48)**

(54) **THIXOTROPIERUNGSMITTEL**

THIXOTROPING AGENT

AGENTS THIXOTROPES

(84) Benannte Vertragsstaaten:
**DE ES FR**

(30) Priorität: **25.05.1999 DE 19924170**

(43) Veröffentlichungstag der Anmeldung:
**27.03.2002 Patentblatt 2002/13**

(73) Patentinhaber: **BASF Coatings AG**
**48165 Münster (DE)**

(72) Erfinder:
- **HEID, Ingrid**
  **D-48149 Münster (DE)**
- **KLEINE BECKMANN, Helmut**
  **D-48346 Ostbevern (DE)**
- **RÖCKRATH, Ulrike**
  **D-48308 Senden (DE)**
- **BAUMGART, Hubert**
  **D-48163 Münster (DE)**

(74) Vertreter: **Fitzner, Uwe, Dr.**
**Lintorfer Strasse 10**
**40878 Ratingen (DE)**

(56) Entgegenhaltungen:

| | |
|---|---|
| **DE-A- 4 310 413** | **US-A- 4 528 319** |
| **US-A- 4 677 028** | **US-A- 5 391 620** |

- **PATENT ABSTRACTS OF JAPAN vol. 1999, no. 05, 31. Mai 1999 (1999-05-31) & JP 11 043640 A (MITSUBISHI GAS CHEM CO INC), 16. Februar 1999 (1999-02-16)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 189 998 B1

## Beschreibung

Die Erfindung betritrt ein Thixotropierungsmittel erhältlich aus der Umsetzung einer isocyanatgruppenhaltigen Komponente mit einem primären oder sekundären Amin oder einer Mischung solcher Amine und/oder Wasser, die Verwendung eines solchen Thixotropierungsmittels und ein Verfahren zur Herstellung eines solchen Thixotropierungsmittels.

Beschichtungsstoffe mit Thixotropierungsmitteln sind bekannt. In den Literaturstellen EP-A-192 304, DE-A-23 59 923, DE-A-18 05 693, WO 94/22968 und DE-C-27 51 761 sind Beschichtungsstoffe beschrieben, welche als Thixotropierungsmittel Harnstoffderivate enthalten. Andererseits sind beispielsweise in den Literaturstellen WO 97/12945 und "farbe + lack", 11/1992, Seiten 829 ff., Beschichtungsstoffe beschrieben, welche als Thixotropierungsmittel modifizierte, hydrophile oder hydrophobe Kieselsäuren enthalten. In dieser Literaturstelle sind auch Harnstoffderivate als Alternative beiläufig erwähnt. Schließlich sind in der Literaturstelle DE-A-37 26 959 Beschichtungsstoffe bekannt, welche Harnstoff in gelöster Form enthalten. Aufgrund der Tatsache, daß der Harnstoff gelöst ist, dürfte dieser nicht die Funktion eines Thixotropierungsmittels erfüllen.

Mit dem Einsatz von Thixotropierungsmitteln in Beschichtungsstoffen soll unter anderem die Applikation von vergleichsweise dicken Lackschichten ermöglicht werden, ohne daß es zu störender "Läuferbildung" kommt. Insbesondere im Fall von nichtwäßrigen Lacken, die ein Thixotropierungsmittel auf Basis von Harnstoffderivaten enthalten, werden, jedenfalls bei hohen Feststoffgehalten, Beschichtungsstoffe und Lackoberflächen erhalten, die nicht allen Anforderungen genügen.

Wesentliches Merkmal von Thixotropierungsmitteln ist, daß die Viskosität eines damit hergestellten Lackes von der Vorgeschichte des Fließens abhängt und/oder daß die Thixotropierungsmittel strukturviskos sind, i.e., daß die Viskosität des Lackes mit steigender Scherbeanspruchung abnimmt. Ausgehend von einer Grundviskosität nimmt während einer Scherbeanspruchung die Viskosität ab und geht nach Beendigung der Scherbeanspruchung erst allmählich auf den Ausgangswert zurück. Ein thixotropes Gel beispielsweise verflüssigt sich durch Eintrag mechanischer Energie (Rühren oder dergleichen) und verfestigt sich nach Abschluß des Energieeintrags erst allmählich wieder. Strukturviskose bzw. thixotrope Eigenschaften sind für die Lackverarbeitung vorteilhaft. Insbesondere kann die Neigung zur Läuferbildung bei Auftrag eines Lackes mit hoher Naßschichtdicke kontrolliert und reduziert werden. Andererseits dürfen Thixotropierungsmittel die optischen und chemischen Eigenschaften einer damit hergestellten fertigen Lackierung nicht negativ beeinflussen. Thixotropierungsmittel sind in aller Regel partikulär und in einem Beschichtungsstoff, sei es wäßrig oder nichtwäßrig, dispergiert. Im Falle der Harnstoffderivate sind dies nadelförmige, zum Teil helixartig verdrillte Kristalle, wobei vorzugsweise eine Teilchengrößenverteilung zwischen 0,1µm und 6µm (95-99% der Teilchen, bezogen auf das Volumen) eingerichtet ist und 80% der Kristalle (bezogen auf die Anzahl) kleiner als 2µm sind.

Der Erfindung liegt daher das technische Problem zugrunde, ein Thixotropierungsmittel anzugeben, welches durch Umsetzung eines Isocyanats, insbesondere eines Diisocyanats, mit primären oder sekundären Aminen oder einer Mischung solcher Amine und/oder Wasser erhältlich ist und mit welchem in Beschichtungsstoffen eine deutlich reduzierte Neigung zur Läuferbildung erreicht wird, wobei eine mit einem solchen Beschichtungsstoff erhaltene Lakkierung allen Anforderungen genügt.

Dementsprechend wird ein Thixotropiermittel zur Verfügung gestellt, das erhältlich ist aus der Umsetzung einer isocyanatgruppenhaltigen Komponente mit einem primären oder sekundären Amin oder einer Mischungsolcher Amine und/oder Wasser, dadurch gekennzeichnet, dass die isocyanatgruppenhaltige Komponente

Ia) zumindest eines Isocyanats mit mindestens einer Diisocyanat-Struktureinheit, welche

i) eine ungesättigte bzw. aromatische oder nicht aromatische Ringstruktur mit 5-10 Ringatomen und
ii) zwei an die Ringstruktur gebundene Isocyanatgruppen aufweist, wobei
iii) im Falle einer nicht aromatischen Ringstruktur

a) beide Isocyanatgruppen über lineares $C_1$-$C_9$-Alkyl und/oder lineares $C_2$-$C_{10}$-Etheralkyl oder
b) eine Isocyanatgruppe direkt und die andere über lineares $C_2$-$C_9$-Alkyl und/oder lineares $C_2$-$C_{10}$-Etheralkyl und

iv) im Fall einer ungesättigten oder aromatischen Ringstruktur mindestens eine der beiden Isocyanatgruppen über lineares $C_2$-$C_9$-Alkyl und/oder lineares $C_2$-$C_{10}$-Etheralkyl,wobei beide Reste keine benzylischen Wasserstoffatome aufweisen, mit der Ringstruktur verbunden ist oder sind;

und/oder

Ib) zumindest eines Oligomers dieses Isocyanats Ia), wobei 2 bis 10 Monomereinheiten des Isocyanats Ia) umgesetzt werden, insbesondere ein Trimer;
und/oder

Ic) mindestens eines partiell blockiertes Isocyanats I a) und/oder mindestens eines partiell blockiertes Oligomeren Ib)

enthält oder hieraus besteht.

Überraschenderweise führt der Einsatz des erfindungsgemäßen Thixotropierungsmittels hinsichtlich der Thixotropie zu optimalen Eigenschaften und ergibt Lackierungen, insbesondere Klariackierungen, welche allen Anforderungen, insbesondere Verlauf und Glanz, genügen. Es lassen sich an vertikalen Substratflächen Trockenfilmdicken von bis zu 50µm und mehr ohne Läuferbildung herstellen. Die erfindungsgemäße isocyanatgruppenhaltige Komponente kann zusätzlich grundsätzlich noch im folgenden beschriebene Isocyanate üblichen Aufbaus enthalten.

Eine bevorzugte Ausführungsform der Erfindung ist dadurch gekennzeichnet, daß das Thixotropierungsmittel erhältlich ist durch Umsetzung der isocyanatgruppenhaltigen Komponente mit einem aliphatischen, primären Monoamin.

Die Erfindung lehrt weiterhin die Verwendung eines erfindungsgemäßen Thixotropierungsmittels zur Herstellung eines Beschichtungsstoffs, vorzugweise eines nichtwäßrigen Beschichtungsstoffs, höchstvorzugsweise eines nichtwäßrigen Glanzklarlacks. Bei dem Beschichtungsstoff kann es sich um ein Einkomponenten- oder Zwei- oder Mehrkomponentensystem handeln.

Im Rahmen der vorliegenden Erfindung ist unter einem Einkomponenten(1K)-System ein thermisch härtender Beschichtungsstoff zu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und/oder bei Bestrahlen mit aktinischer Strahlung miteinander vernetzen.

Im Rahmen der vorliegenden Erfindung ist unter einem Zweikomponenten(2K)-oder Mehrkomponenten(3K, 4K)-System ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Im Rahmen der Verwendung ist es bevorzugt, wenn der Beschichtungsstoff mindestens ein Bindemittel, vorzugsweise ein Polyacrylatharz, mindestens ein Vernetzungsmittel, vorzugsweise ausgewählt aus der Gruppe bestehend aus Polyisocyanaten, Polyepoxiden, blockierten Polyisocyanaten, Tris(alkoxycarbonylamino)triazinen, Aminoplastharzen, beta-Hydroxyalkylamiden, Siloxanen und Polyanhydriden sowie Mischungen dieser Verbindungen, das erfindungsgemäße und, optional, Lackadditive enthält.

Die Erfindung betrifft schließlich ein Verfahren zur Herstellung des erfindungsgemäßen Thixotropierungsmittels, wobei

a) das primäre oder sekundäre Amin oder eine Mischung solcher Amine und/oder Wasser zu einer Bindemittellösung, vorzugsweise einer nichtwäßrigen Polyacrylatlösung, zugegeben wird und

b) die isocyanatgruppenhaltige Komponente oder einer Lösung dieser Komponente zu der in Stufe a) erhaltenen Lösung zugegeben wird.

Im einzelnen können die Stufen a) und/oder b) in einem Dissolver durchgeführt werden.

Das Thixotropierungsmittel kann in dem Beschichtungsstoff in einer Menge von 0,1 bis 5,0 Gew.-%, vorzugsweise 0,2 bis 2,5 Gew.-%, höchstvorzugsweise 0,6 bis 1,8 Gew.-%, bezogen auf den Gesamtfeststoffgehalt des Beschichtungsstoffs, eingesetzt werden.

Die Amine und die polyisocyanatgruppenhaltige Komponente können in solchen Mengen miteinander umgesetzt werden, daß das Äquivalentverhältnis zwischen Aminogruppen und Isocyanatgruppen zwischen 1,2 und 0,4, vorzugsweise zwischen 1,0 und 0,8 liegt.

Als Monoamine werden vorzugsweise primäre Monoamine, besonders bevorzugt araliphatische oder aliphatische primäre Monoamine, ganz besonders bevorzugt aliphatische primäre Monoamine mit mindestens 6 C-Atomen im Molekül eingesetzt. Als Beispiele für einsetzbare Monoamine werden genannt: Benzylamin, Ethylamin, n-Propylamin, Isopropylamin, n-Butylamin, Isobutylamin, tert. -Butylamin, Pentylamin, n-Hexylamin, n-Octylamin, iso-Nonylamin, iso-Tridecylamin, n-Decylamin und Stearylamin. Ebenso sind primäre und sekundäre Amine einsetzbar, welche Ethergruppen enthalten. Es handelt sich um Stoffe der allgemeinen Formel $(CH_3\text{-}(CH_2)_a\text{-}O\text{-}(CH_2)_b)_cNH_d$, wobei a eine ganze Zahl von 0 bis 10, b eine ganze Zahl von 1 bis 20, c 1 oder 2 ist und die Summe aus c und d stets 3 beträgt. Vorzugsweise sind a = 0, b = 3, c = 1 und d = 2.

Für die zusätzlich in der isocyanatgruppenhaltige Komponente verwendeten Polyisocyanate können im Prinzip alle mindestens zwei Isocyanatgruppen pro Molekül enthaltende organischen Verbindungen eingesetzt werden. Es können auch isocyanatgruppenhaltige Reaktionsprodukte aus beispielsweise Polyolen und Polyaminen und Polyisocyanaten eingesetzt werden. Vorzugsweise werden Diisocyanate, ganz besonders bevorzugt aliphatische Diisocyanate, insbesondere Hexamethylendiisocyanat eingesetzt. Als Beispiel für einsetzbare Polyisocyanate werden genannt: Tetramethylen-1,4-diisocyanat, Hexamethylen-1,6-di-isocyanat, omega,omega'-Dipropyl-äther-diisocyanat, Cyclohexyl-1,4-diisocyanat, Dicyclohexylmethan-4,4'-diisocyanat, 1, 5-Dimethyl-2,4-di(isocyanato-methyl)-benzol, 1,5-Di-methyl-2,4-di(isocyanatoethyl)-benzol, 1,3,5-Trimethyl-2,4-di(isocyanatomethyl)-benzol, 1,3,5-Triethyl-2,4-di (isocyanatomethyl)-benzol, das Trimere des Hexamethylen-1,6-diisocyanats, Isophorondiisocyanat, Dicyclohexyldimethylmethan-4,4'-diisocyanat, 2,4-Toluylendiisocyanat, 2,6-Toluylendiisocyanat, Diphenylmethan-4,4'-diisocyanat. Weitere Beispiele geeigneter Polyisocyanate und Diisocyanate sind nachstehend bei den als Vernetzungsmittel verwendeten Polyisocyanaten und Diisocyanaten aufgeführt.

Das erfindungesgemäß zu verwendende Isocyanat Ia) weist mindestens eine Diisocyanat- Struktureinheit mit einer speziellen Struktur auf. Zwar kann das Isocyanat Ia) zwei oder mehr dieser Diisocyanat-Struktureinheiten aufweisen, indes hat es sich bewährt, nur eine zu verwenden.

Bezüglich der Diisocyanat-Struktureinheit des Diisocyanats Ia) bestehen verschiedene Möglichkeiten der weiteren Ausbildung, die folgend beschrieben werden.

Hinsichtlich der Ringstruktur (i) ist es grundsätzlich möglich, daß es sich um Heteroringe handelt. Dann enthält die Ringstruktur (i) neben C-Atomen als Ringatome auch davon verschiedene Ringatome, wie beispielsweise N-Atome, O-Atome oder Si-Atome. Hierbei kann es sich um gesättigte oder ungesättigte bzw. aromatische Heteroringe handeln. Beispiele geeigneter gesättigter Heteroringe sind die Silacyclopentan-, Silacyclohexan-, Oxolan-, Oxan-, Dioxan-, Morpholin-, Pyrrolidin-, Imidazolidin-, Pyrazolidin-, Piperidin- oder Chinuklidinringe. Beispiele geeigneter ungesättigter bzw. aromatischer Heteroringe sind Pyrrol-, Imidazol-, Pyrazol-, Pyridin-, Pyrimidin-, Pyrazin-, Pyridazin- oder Triazinringe. Bevorzugt ist es, wenn die Ringstruktur (i) als Ringatome ausschließlich C-Atome enthält.

Die Ringstruktur (i) kann einerseits brückenfrei sein. In dem Fall, daß die Ringstruktur (i) ein bicyclisches Terpen-Grundgerüst, Decalin, Adamantan oder Chinuklidin ist, können jedoch Brücken enthalten sein. Beispiele geeigneter Terpen-Grundgerüste sind Caran-, Norcaran-, Pinan-, Camphan- oder Norbonan-Grundgerüste.

Die Wasserstoffatome einer Diisocyanat-Struktureinheit Ia), insbesondere der Ringstruktur (i), können durch Gruppen oder Atome substituiert sein, welche weder mit Isocyanaten noch mit dem Amin und/dem Bindemittel reagieren. Beispiele geeigneter Gruppen sind Nitro-, Alkyl-, Cycloalkyl-, Perfluoralkyl-, Perfluorcycloalkyl- oder Arylgruppen. Beispiele geeigneter Atome sind Halogenatome, insbesondere Fluor.

Vorteilhafterweise besteht die Ringstruktur (i) aus 6 C-Atomen, insbesondere in Form von Cyclohexan oder Benzol.

Beispiele für geeignetes lineares $C_1$-$C_9$-Alkyl sind Methylen- oder Ethylen- sowie Tri, Tetra-, Penta-, Hexa-, Hepta-, Octa- oder Nonamethylenreste, insbesondere Methylenreste.

Die linearen $C_2$-$C_{10}$-Etheralkyle sind entweder über die Sauerstoffatome oder über die darin enthaltenen Alkandiylreste mit der Ringstruktur verbunden. Vorzugsweise sind sie über die Sauerstoffatome hiermit verbunden. Die Indices 2 bis 10 bedeuten, daß 2 bis 10 C-Atome in den Etheralkylen enthalten sind.

Die Etheralkyle können nur 1 Sauerstoffatom enthalten. Es ist von Vorteil, wenn 2 bis 10, insbesondere 2 bis 5 Sauerstoffatome in der Kette vorhanden ist. Dann befinden sich 1 oder mehr, insbesondere aber 2, C-Atome zwischen 2 Sauerstoffatomen.

Beispiele geeigneter $C_2$-$C_{10}$-Etheralkyle sind

$-(O-CH_2)_m-$, worin m = 1 bis 10,
$-(O-C_2H_4)_p-$, worin p = 1 bis 5,
$-(O-C_3H_6)_q$, worin q = 1 bis 3 oder
$-(O-C_4H_8)_r-$, worin r = 1 bis 2.

Wenn das Isocyanat Ia) zumindest eine Diisocyanat-Struktureinheit mit einer nicht aromatischen Ringstruktur (i), insbesondere Cyclohexan, enthält, können beide Isocyanatgruppen über $-CH_2-$, vorzugsweise an die Positionen 1 und 3 der Ringstruktur gebunden sein. Es ist aber auch eine Bindung an die Positionen 1,2 und 1,4 möglich. Die Diisocyanat-Struktureinheit bzw. das Isocyanat Ia) hat dann beispielsweise die Formel $C_6H_{10}(-CH_2-NCO)_2$

Es ist aber auch möglich, daß eine der beiden Isocyanatgruppen unmittelbar an ein Ringatom einer nicht aromatischen Ringstruktur (i), insbesondere Cyclohexan, gebunden ist und daß die zweite Isocyanatgruppe über $C_2$-$C_9$-Alkyl, insbesondere $C_3$- Alkyl an ein weiteres Ringatom, vorzugsweise in 1,2-Konfiguration, gebunden ist. Die Diisocyanat-Struktureinheit bzw. das Isocyanat Ia) hat dann beispielsweise die Formel $C_6H_{10}(-NCO)(-C_3H_6-NCO)$.

Wenn das Isocyanat Ia) zumindest eine Diisocyanat-Struktureinheit mit einer ungesättigten oder aromatischen Ringstruktur (i), insbesondere Benzol, enthält, können beide Isocyanatgruppen über $C_2$-$C_9$-Alkyl hiermit ver-

bunden sein. Wichtig ist, daß die Alkandiylreste keine benzylischen Wasserstoffatome enthalten, sondern an deren Stelle Substituenten $R^1$ und $R^2$ tragen, welche weder mit Isocyanaten noch mit dem Amin oder dem Bindemittel reagieren. Beispiele geeigneter Substituenten $R^1$ und $R^2$ sind $C_1$-$C_{10}$-Alkyl, Aryl- oder Halogen, vorzugsweise $-CH_3$.

Beispiele geeigneter Alkandiylgruppen sind demnach $-CR^1R^2-(CH_2)_n-$, worin n = 1 bis 8, insbesondere 1 bis 4, und $R^1$ und $R^2$ = die vorstehend angegebenen Substituenten.

Die vorstehend beschriebenen Alkandiylgruppen sind vorzugsweise an die Positionen 1 und 3 des Benzolrings gebunden. Es ist indes auch in diesem Fall eine Bindung an die Positionen 1,2 und 1,4 möglich. Die Düsocyanat-Struktureinheit bzw. das erfindungsgemäß zu verwendende Isocyanat Ia) hat dann beispielsweise die Formel $C_6H_4(-C(CH_3)_2-C_2H_4-NCO)_2$.

Die beiden Isocyanatgruppen können indes auch über die vorstehend beschriebenen $C_2$-$C_{10}$-Etheralkyle mit dem ungesättigten oder aromatischen Ringstruktur, insbesondere Benzol, verbunden sein. Wichtig ist, daß die Etheralkyle keine benzylischen Wasserstoffatome tragen. Dies kann im Falle, daß die Etheralkyle über C-Atome mit der aromatischen Ringstruktur verknüpft sind, dadurch erreicht werden, daß die benzylischen C-Atome die vorstehend beschriebenen Substituenten $R^1$ und $R^2$ tragen. Wenn die Etheralkyle über Sauerstoffatome mit dem aromatischen Ringstruktur verknüpft sind, sind keine benzylischen Wasserstoffatome vorhanden, weswegen diese Variante bevorzugt wird.

Es ist auch hier möglich, daß eine der beiden Isocyanatgruppen unmittelbar an ein Ringatom einer ungesättigten oder aromatischen Ringstruktur (i), vorzugsweise eines Benzolrings, gebunden ist und daß die zweite Isocyanatgruppe beispielsweise über $C_3$-$C_9$-Alkyl, welches keine benzylischen Wasserstoffatome aufweist, an eine weiteres Ringatom, vorzugsweise in 1,2-Konfiguration, gebunden ist. Die Diisocanat-Struktureinheit bzw. das erfindungsgemäß zu verwendende Isocyanat Ia) hat dann beispielweise die Formel $C_6H_4(-NCO)(-C(CH_3)_2-(CH_2)_2-NCO)$.

Anstelle des Isocyanats Ia) oder zusätzlich zu diesem kann mindestens ein Oligomer Ib) verwendet werden. Das Oligomer Ib) wird hergestellt aus dem Isocyanat Ia), wobei 2 bis 10 Monomereinheiten umgesetzt werden und wobei die Trimerisierung bevorzugt wird. Die Oligomerisierung und Trimersierung kann mit Hilfe üblicher und bekannter geeigneter Katalysatoren zur Bildung von Uretdion und/oder Isocyanuratgruppen führen.

Anstelle des Isocyanats Ia) und/oder des Oligomeren Ib) oder zusätzlich zu diesen beiden können mindestens ein partiell blockiertes Isocyanat Ia) und/oder mindestens ein partiell blockiertes Oligomer Ib) verwendet werden.

Beispiele geeigneter Blockierungsmittel sind die aus der US-Patentschrift 4,444,954 bekannten Blockierungsmittel wie i) Phenole wie Phenol, Cresol, Xylenol, Nitrophenol, Chlorophenol, Ethylphenol, t-Butylphenol, Hydroxybenzoesäure, Ester dieser Säure oder 2,5-di-t-Butyl-4-hydroxy- toluol; ii) Lactame, wie - Caprolactam, -Valerolactam, -Butyrolactam oder -Propiolactam; iii) aktive methylenische Verbindungen, wie Diethylmalonat, Dimethylmalonat, Ethylacetoacetat, Methylacetoacetat oder Acetylaceton; iv) Alkohole wie Methanol, Ethanol, n-Propanol, Isopropanol, n-Butanol, Isobutanol, t-Butanol, n-Amylalkohol, t-Amylalkohol, Laurylalkohol, Ethylen- glykolmonomethylether, Ethylenglykolmonoethylether, Ethylenglycolmonopropylether, Ethylenglykolmonobutylether, Diethylenglykolmonomethyl- ether, Diethylenglykolmonoethylether, Propylenglykolmonomethylether,

Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol oder Acetocyanhydrin; v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol; vi) Säureamide wie Acetoanilid, Acetoanisidinamid, Acrylamid, Methacrylamid, Essigsäureamid, Stearinsäureamid oder Benzamid; vii) Imide wie Succinimid, Phthalimid oder Maleimid; viii) Amine wie Diphenylamin, Phenylnaphthylamin, Xylidin, N-Phenylxylidin, Carbazol, Anilin, Naphthylamin, Butylamin, Dibutylamin oder Butylphenylamin; ix) Imidazole wie Imidazol oder 2-Ethylimidazol, x) Harnstoffe wie Harnstoff, Thioharnstoff, Ethylenharnstoff, Ethylenthioharnstoff oder 1,3-Diphenylharnstoff; xi) Carbamate wie N-Phenylcarbamidsäurephenylester oder 2-Oxazolidon; xii) Imine wie Ethylenimin, xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime; xiv) Salze der schwefeligen Säure wie Natriumbisulfit oder Kaliumbisulfit; xv) Hydroxamsäureester wie Benzylmethacrylohydroxamat (BMH) oder Allylmethacrylohydroxamat oder xvi) substituierte Pyrazole, Imidazole oder Triazole.

Die vorstehend beschriebenen Oligomere Ib) oder Ic) und Trimere Ib) oder Ic) haben vorteilhafterweise eine NCO-Funktionalität von 2,0-5,0, vorzugsweise von 2,2-4,0, insbesondere von 2,5-3,8.

Die vorstehend im Detail beschriebenen Isocyanate Ia), deren Oligomere Ib) und/oder Trimere Ib) und/oder die Verbindungen Ic) können die einzigen Verbindungen zur Herstellung des Thixotropierungsmittels sein oder in Mischung mit den davor beschriebenen Isocyanaten verwendet werden.

Das Thixotropierungsmittel kann separat hergestellt werden oder in Gegenwart des eingesetzten Polyacrylatharzes. In letzterem Fall wird üblicherweise so vorgegangen, daß die Aminkomponente zu einer Lösung des Acrylatharzes in einem organischen Lösemittel bzw. in einem Gemisch aus organischen Lösemitteln gegeben wird und dann das Polyisocyanat möglichst schnell und unter sehr starkem Rühren zugegeben wird. Die so erhaltene Mischung aus harnstoffgruppenhaltigem Thixotriopierungsmittel und Polyacrylatharz kann dann in den Beschichtungsstoffen eingesetzt werden.

In einem mit dem erfindungsmäßen Thixotropierungsmittel hergestellten Beschichtungsstoff können weitere Thixotropierungsmittel enthalten sein, beispielsweise Kieselsäure. Die Kieselsäure kann eine modifizierte, pyrogene, vorzugsweise hydrophobe, Kieselsäure sein. Hydrophile und hydrophobe Kieselsäuren sind käuflich erwerblich beispielsweise unter dem Handelsnamen Aerosil® und unter den Produktbezeichnungen 200, R972, R974, R805 und R812 von der Firma Degussa AG, Hanau. Die Kieselsäure wird in einer Menge von 0,1 bis 30 Gew.-%, vorzugsweise 0,5 bis 10 Gew.-%, höchstvorzugsweise 1,0 bis 5,0 Gew.-%, bezogen auf den Gesamtfeststoffgehalt des Beschichtungsstoffs, eingesetzt.

Im Rahmen der Erfindung können die verschiedensten Bindemittel als Hauptbindemittel eingesetzt werden. Als Hauptbindemittel sind solche Bindemittel bezeichnet, die den mengenmäßig größten Anteil an ggf. verwendeten verschiedenen Bindemitteln haben. In Frage kommen beispielsweise ggf. hydroxylgruppenhaltige Polyacrylate, Polyester, Polyurethane, Polyepoxide und Alkydharze, ggf. ölmodifiziert. Im Falle von Bindemitteln für wäßrige Lacke enthalten die Bindemittel ionische oder nichtionische Gruppen, welche eine Wasserlöslichkeit oder Wasserdispergierbarkeit gewährleisten.

Erfindungsgemäß sind hydroxylgruppenhaltige Polyacrylate oder Polyacrylatharze von Vorteil und werden deshalb bevorzugt verwendet.

Im Falle der Polyacrylate für nichtwäßrige Beschichtungsstoffe kann das Bindemittel insbesondere ein Polyacrylatharz sein, welches herstellbar ist, indem (a) 16 bis 51 Gew.-%, vorzugsweise 16 bis 28 Gew.-%, eines hydroxylgruppenhaltigen Esters der Acrylsäure oder Methacrylsäure oder eines Gemisches aus solchen Monomeren, (b) 32 bis 84 Gew.-%, vorzugsweise 32 bis 63 Gew.-%, eines von (a) verschiedenen aliphatischen oder cycloaliphatischen Esters der Acrylsäure oder Methacrylsäure mit vorzugsweise mindestens 4 C-Atomen im Alkoholrest oder eines Gemisches aus solchen Monomeren, (c) 0 bis 2 Gew.-%, vorzugsweise 0 bis 1 Gew.-%, einer ethylenisch ungesättigten Carbonsäure oder einer Mischung aus ethylenisch ungesättigten Carbonsäuren und (d) 0 bis 30 Gew.-%, vorzugsweise 0 bis 20 Gew.-%; eines von (a), (b) und (c) verschiedenen ethylenisch ungesättigten Monomers oder eines Gemisches aus solchen Monomeren zu einem Polyacrylatharz mit einer Säurezahl von 0 bis 15, vorzugsweise 0 bis 8, einer Hydroxylzahl von 80 bis 140, vorzugsweise 80 bis 120, und einem zahlenmittleren Molekulargewicht von 1.500 bis 10.000, vorzugsweise 2.000 bis 5.000, polymerisiert werden, wobei die Summe der Gewichtsanteile der Komponenten (a), (b), (c) und (d) stets 100 Gew.-% ergibt.

Die Herstellung der bevorzugt eingesetzten Polyacrylatharze kann nach allgemein gut bekannten Polymerisationsverfahren in Masse, Lösung oder Emulsion erfolgen. Polymerisationsverfahren zur Herstellung von Polyacrylatharzen sind allgemein bekannt und vielfach beschrieben (vgl. z.B.: Houben Weyl, Methoden der organischen Chemie, 4. Auflage, Band 14/1, Seite 24 bis 255 (1961)).

Weitere Beispiele geeigneter (Co)Polymerisationsverfahren für die Herstellung der Polyacrylatharze werden in den Patentschriften DE-A-197 09 465, DE-C-197 09 476, DE-A-28 48 906, DE-A-195 24 182, EP-A-0 554 783, WO 95/27742, DE-A-38 41 540 oder WO 82/02387 beschrieben.

Vorteilhaft sind Taylorreaktoren, insbesondere für die Copolymerisation in Masse, Lösung oder Emulsion.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität $\nu$ des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i \, r_i \, d \, \nu^{-1} \, (d/\, r_i)^{1/2} \qquad (I)$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf. Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die

Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei nur ein geringer Stoffaustausch zwischen benachbarten Wirbelpaaren auftritt. Die Vermischung innerhalb solcher Wirbelpaare ist sehr hoch, wogegen die axiale Vermischung über die Paargrenzen hinaus nur sehr gering ist. Ein Wirbelpaar kann daher als gut durchmischter Rührkessel betrachtet werden. Das Strömungsystem verhält sich somit wie ein ideales Strömungsrohr, indem die Wirbelpaare mit konstanter Verweilzeit wie ideale Rührkessel durch den Spalt wandern.

Erfindungsgemäß von Vorteil sind hierbei Taylorreaktoren mit einer äußeren Reaktorwand und einem hierin befindlichen konzentrisch oder exzentrisch angeordneten Rotor, einem Reaktorboden und einem Reaktordeckel, welche zusammen das ringspaltförmige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Die eingesetzten Polyacrylatharze werden vorzugsweise mit Hilfe des Lösungspolymerisationsverfahrens hergestellt. Hierbei wird üblicherweise ein organisches Lösemittel bzw. Lösemittelgemisch vorgelegt und zum Sieden erhitzt. In dieses organische Lösemittel bzw. Lösemittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160°C, vorzugsweise zwischen 130 und 150°C. Als Polymerisationsinitiatoren werden vorzugsweise freie Radikale bildende Initiatoren eingesetzt. Initiatorkraft und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Dialkylperoxide, wie Di-tert.-Butylperoxid oder Dicumyl-peroxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Azodinitrile wie Azobisisobutyronitril oder C-C-spaltende Initiatoren wie Benzpinakolsilylether.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstorfen) werden so ausgewählt, daß die eingesetzten Polyacrylatharze ein zahlenmittleres Molekulargewicht von 1.500 bis 10.000, vorzugsweise 2.000 bis 5.000 (bestimmt durch Gelpermeationschromatographie unter Verwendung von Polystyrol als Eichsubstanz) aufweisen.

Die Säurezahl der eingesetzten Polyacrylatharze kann vom Fachmann durch Einsatz entsprechender Mengen der Komponente (c) eingestellt werden. Analoges gilt für die Einstellung der Hydroxylzahl. Sie ist über die Menge an eingesetzter Komponente (a) steuerbar.

Als Komponente (a) kann im Prinzip jeder hydroxylgruppenhaltige Ester der Acrylsäure oder Methacrylsäure oder ein Gemisch aus solchen Monomeren eingesetzt werden. Als Beispiele werden genannt: Hydroxyalkylester der Acrylsäure, wie z.B. Hydroxyethylacrylat, Hydroxypropyl- acrylat, Hydroxybutylacrylat, insbesondere 4-Hydroxybutylacrylat; Hydroxyalkylester der Methacrylsäure, wie z.B. Hydroxyethylmethacrylat, Hydroxypropylmethacrylat, Hydroxybutylmethacrylat, insbesondere 4-Hydroxybutyl- methacrylat; Umsetzungsprodukte aus cyclischen Estern, wie z.B. E-Caprolacton und Hydroxyalkylestern der Acrylsäure bzw. Methacrylsäure.

Die Zusammensetzung der Komponente (a) wird vorzugsweise so ausgewählt, daß bei alleiniger Polymerisation der Komponente (a) ein Polyacrylatharz mit einer Glasüber- gangstemperatur von -50 bis +70, vorzugsweise -30 bis +50°C erhalten wird. Die Glasübergangstemperatur kann vom Fachmann unter Zuhilfenahme der Formel

$$1/T_G = \sum_{n=1}^{n=x} W_n/T_{Gn}$$

$T_G$ = Glasübergangstemperatur des Polymeren
x = Anzahl der verschiedenen einpolymerisierten Monomere,
$W_n$ = Gewichtsanteil des n-ten Monomers
$T_{Gn}$ = Glasübergangstemperatur des Homopolymers aus dem n-ten Monomer

näherungsweise berechnet werden.

Als Komponente (b) kann im Prinzip jeder von (a) verschiedene aliphatische oder cycloaliphatische Ester der

Acrylsäure oder Methacrylsäure mit mindestens 4 C-Atomen im Alkoholrest oder ein Gemisch aus solchen Monomeren eingesetzt werden. Als Beispiele werden genannt: aliphatische Ester der Acryl- und Methacrylsäure mit 4 bis 20 C-Atomen im Alkoholrest, wie z.B. n-Butyl-, iso-Butyl-, tert.-Butyl, 2-Ethylhexyl-, Stearyl- und Laurylacrylat und -methacrylat sowie cycloaliphatische Ester der Acryl- und Methacrylsäure wie z. B. Cyclohexylacrylat und Cyclohexylmethacrylat. Die Zusammensetzung der Komponente (b) wird vorzugsweise so ausgewählt, daß bei alleiniger Polymerisation der Komponente (b) ein Polyacrylatharz mit einer Glasübergangstemperatur von 10 bis 100, vorzugsweise 20 bis 60°C, erhalten wird.

Als Komponente (c) kann im Prinzip jede ethylenisch ungesättigte Carbonsäure oder eine Mischung aus ethylenisch ungesättigten Carbonsäuren eingesetzt werden. Als Komponente (c) werden vorzugsweise Acrylsäure und/oder Methacrylsäure eingesetzt.

Als Komponente (d) kann im Prinzip jedes von (a), (b) und (c) verschiedene ethylenisch ungesättigte Monomer oder ein Gemisch aus solchen Monomeren eingesetzt werden. Als Beispiele für Monomere, die als Komponente (d) eingesetzt werden können, werden genannt: vinylaromatische Kohlenwasserstoffe, wie Styrol, alpha-Alkylstyrol und Vinyltoluol, Amide der Acrylsäure und Methacrylsäure, wie z.B. Methacrylamid und Acrylamid, Nitrile der Methacrylsäure und Acrylsäure; Vinylether und Vinylester oder Polysiloxanmakromonomere, wie sie in den Patentschriften DE-A-38 07 571, DE-A 37 06 095, EP-B-0 358 153, US-A 4,754,014, DE-A 44 21 823 oder WO 92/22615 beschrieben werden. Als Komponente (d) werden vorzugsweise vinylaromatische Kohlenwasserstoffe, insbesondere Styrol eingesetzt. Die Zusammensetzung der Komponente (d) wird vorzugsweise so ausgewählt, daß bei alleiniger Polymerisation der Komponente (d) ein Harz mit einer Glasübergangstemperatur von 70 bis 120, vorzugsweise 80 bis 100°C erhalten wird.

Vorteilhafterweise sind die Bindemittel in dem Beschichtungsstoff in einer Menge von 10 bis 90 Gew.-%, besonders bevorzugt 15 bis 80 Gew.-% und insbesondere 20 bis 70 Gew.-%, jeweils bezogen auf die Gesamtmenge des Beschichtungsstoffs, enthalten.

Der Beschichtungsstoff enthält des weiteren mindestens ein Vernetzungsmittel.

Handelt es sich bei dem Beschichtungsstoff um ein Mehrkomponentensystem, werden Polyisocyanate und/oder Polyepoxide, insbesondere aber Polyisocyanate als Vernetzungsmittel verwendet.

Beispiele geeigneter Polyisocyanate sind die vorstehend beschriebenen Diisocyanate Ia) und/oder deren Oligomere Ib) und/oder Trimere Ib).

Weitere Beispiele geeigneter Polyisocyanate sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und insbesondere 100 bis 2000 mPas (bei 23 °C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel die Polyisocyanate sind beispielsweise Ethoxyethylpropionat, Amylmethylketon oder Butylacetat. Außerdem können die Polyisocyanate in üblicher und bekannter Weise hydrophil oder hydrophob modifiziert sein.

Beispielsweise geeignet sind auch die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate sind Isocyanurat-, Biuret-, Allophanat-, Iminooxadiazindon-, Urethan-, Harnstoff und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat oder Dicyclohexylmethan-4,4'-diisocyanat, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Weitere Beispiele für geeignete Isocyanate sind in "Methoden der organischen Chemie", Houben-Weyl, Band 14/2, 4. Auflage, Georg Thieme Verlag, Stuttgart 1963, Seite 61 bis 70, W. Siefken, Liebigs Ann. Chem. 562, 75 bis 136, der europäischen Patentschrift EP-A-101 832 oder den US-Patentschriften US-PS-3,290,350, UP-PS-4,130,577 und US-PS-4,439,616 beschrieben.

Beispiele für geeignete Polyepoxide sind alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol

EX-321 (Trimethylolpropanpolyglycidylether), Denacol EX-512 (Polyglycerolpolyglycidylether) und Denacol EX-521 (Polyglycerolpolyglycidylether).

Im Falle der Einkomponentensysteme werden Vernetzungsmittel verwendet, welche bei höheren Temperaturen mit den funktionellen Gruppen der Bindemittel reagieren, um ein dreidimensionales Netzwerk aufzubauen. Selbstverständlich können solche Vernetzungsmittel in untergeordneten Mengen in den Mehrkomponentensystemen mit verwendet werden. Im Rahmen der vorliegende Erfindung bedeutet "untergeordnete Menge" einen Anteil, welcher die hauptsächliche Vernetzungsreaktion nicht stört oder gar ganz verhindert.

Beispiele geeigneter Vemetzungsmittel dieser Art sind blockierte Polyisocyanate. Beispiele geeigneter Polyisocyanate sind die vorstehend beschriebenen.

Beispiele für geeignete Blockierungsmittel sind die aus der US-Patentschrift US-A-4,444,954 bekannten Blokkierungsmittel.

Als Vernetzungsmittel können auch Tris(alkoxycarbonylamino)triazine der allgemeinen Formel

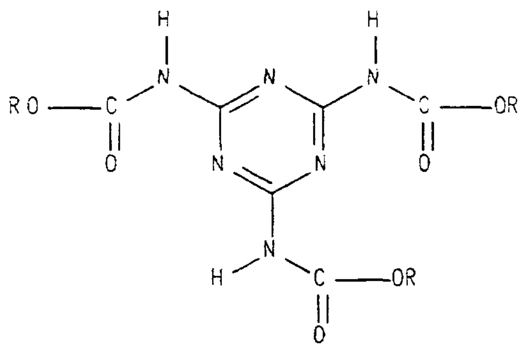

eingesetzt werden.

Beispiele geeigneter Tris(alkoxycarbonylamino)triazine werden in den Patentschriften US-A-4,939,213, US-A-5,084,541 oder der EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele geeigneter Vernetzungsmittel sind beta-Hydroxyalkylamide wie N,N,N',N'-Tetrakis(2-hydroxyethyl)adipamid oder N,N,N',N'-Tetrakis(2-hydroxypropyl)-adipamid.

Weitere Beispiele geeigneter Vemetzungsmittel sind Siloxane, insbesondere Siloxane mit mindestens einer Trialkoxy- oder Dialkoxysilangruppe.

Weitere Beispiele geeigneter Vernetzungsmittel sind Polyanhydride, insbsondere Polysuccinsäureanhydrid.

Die Menge der Vernetzungsmittel in dem Beschichtungsstoff kann breit variieren und richtet sich insbesondere zum einen nach der Funktionalität der Vernetzungsmittel und zum anderen nach der Anzahl der im Bindemittel vorhandenen vernetzenden funktionellen Gruppen sowie nach der Vernetzungsdichte, die man erzielen will. Der Fachmann kann daher die Menge der Vernetzungsmittel aufgrund seines allgemeinen Fachwissens, gegebenenfalls unter Zuhilfenahme einfacher orientierender Versuche ermitteln. Vorteilhafterweise ist das Vernetzungsmittel in dem Beschichtungsstoff in einer Menge von fünf bis 60 Gew.-%, besonders bevorzugt 10 bis 50 Gew.-% und insbesondere 15 bis 45 Gew.-%, jeweils bezogen auf die Gesamtmenge des Beschichtungsstoffs, enthalten. Hierbei empfiehlt es sich des weiteren, die Mengen an Vernetzungsmittel und Bindemittel so zu wählen, daß in dem Beschichtungsstoff das Verhältnis von funktionellen Gruppen im Vernetzungsmittel und funktionellen Gruppen im Bindemittel zwischen 2 : 1 bis 1 : 2, vorzugsweise 1,5 : 1 bis 1 : 1,5, besonders bevorzugt 1,2 : 1 bis 1 : 1,2 und insbesondere 1,1 : 1 bis 1 : 1,1 liegt.

Bevorzugt ist es, daß der Beschichtungsstoff ein nichtwäßriger Beschichtungsstoff, vorzugsweise ein nichtwäßriger, transparenter Glanzklarlack, ist. Der Ausdruck Glanzklarlack meint, daß ein möglichst hoher Glanz angestrebt ist, im Gegensatz zu den Mattlacken.

Im Falle von nichtwäßrigen Beschichtungsstoffen enthalten diese 20 bis 70 Gew.-%, vorzugsweise 40 bis 60 Gew.-%, (bezogen auf den applikationsfertigen Beschichtungsstoff) organische Lösungsmittel, wie z.B. aliphatische, aromatische und/oder cycloaliphatische Kohlenwasserstoffe, Alkylester der Essigsäure oder Propionsäure, Alkanole, Ketone, Glykolether und/oder Glykoletherester.

Darüber hinaus kann der Beschichtungsstoff mindestens ein übliches und bekanntes Lackadditiv in wirksamen Mengen, d.h. in Mengen vorzugsweise bis zu 40 Gew.-%, besonders bevorzugt bis zu 30 Gew.-% und insbesondere bis zu 20 Gew.-%, jeweils bezogen auf den Gesamtfeststoffgehalt des Beschichtungsstoffs, enthalten. Wesentlich ist, daß die Lackadditive die Transparenz und Klarheit des Beschichtungsstoffs nicht negativ beeinflussen.

Beispiele geeigneter Lackadditive sind

- UV-Absorber;
- Lichtschutzmittel wie HALS-Verbindungen, Benztriazole oder Oxalanilide;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe wie Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Rheologiesteuernder Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesüim-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Mattierungsmittel.

Weitere Beispiele geeigneter Lackadditive (a6) werden in dem Lehrbuch »Lackadditive« von Johan Bieleman, Wiley-VCH, Weinheim, New York, 1998, beschrieben.

Es wird weiterhin ein Verfahren zur Herstellung eines Beschichtungsstoffs zur Verfügung gestellt, wobei:

A) ein Bindemittel hergestellt wird,

B) die Herstellung des erfindungsgemäßen Harnstoffderivats in Gegenwart zumindest einer Teilmenge des Bindemittels aus Stufe A) durchgeführt wird und

C) die Mischung aus Bindemittel und Harnstoffderivat

- gegebenenfalls mit einer Anreibung (Paste) einer Kieselsäure mit einer ersten Teilmenge eines optional vom Bindemittel aus Stufe A) verschiedenen Bindemittels, vorzugsweise eines Polyacrylatharzes der vorstehend beschriebenen Art,
- mit einem Vemetzungsmittel oder einer Mischung aus Vernetzungsmitteln und, optional,
- mit mindestens einem der vorstehend beschriebenen Lackadditive,
- mit mit Polyacrylaten verträglichen, von den vorstehend angegebenen Bindemitteln verschiedenen Bindemitteln und
- gegebenenfalls mit der Restmenge der mit dem Bindemittel angeriebenen Kieselsäure

gemischt und auf eine zur Verarbeitung üblichen Viskosität eingestellt wird.

Hierbei kann das Vernetzungsmittel oder die Mischung von Vernetzungsmitteln gleichzeitig oder erst unmittelbar vor einer Applikation des Beschichtungsstoffs zugegeben werden. Im Falle von Zweikomponentensystemen wird das Vernetzungsmittel, beispielsweise unblockierte Polyisocyanate, erst unmittelbar vor der Applikation des Beschichtungsstoffs zugegeben. Im Falle von Einkomponentensystemen kann das Vernetzungsmittel, beispielsweise blockierte Polyisocyanate, bereits herstellerseitig zugegeben sein.

Die Erfindung betrifft weiterhin die Verwendung des Beschichtungsstoffs zur Herstellung eines Glanzklarlackierung über einer farbund/oder effektgebenden Basislackierung, insbesondere einer Basislackierung, welche unter Verwendung eines Wasserbasislacks hergestellt worden ist. Farbgebung wird mittels Farbstoffen und/oder Farbpigmenten erreicht. Effektgebung wird mit Effektpigmenten wie Metalleffektpigmenten oder Micapigmenten erreicht.

Beispiele geeigneter Wasserbasislacke sowie die entsprechenden Lackierungen sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747, EP-A-0 401 565, EP-B-0 730 613 oder WO 95/14721 bekannt.

Die Erfindung betrifft schließlich ein Verfahren zur Herstellung einer farbund/oder effektgebenden Mehrschichtlackierung auf einer Oberfläche von grundierten oder ungrundierten Substraten, bei dem (1) ein mit farb- und/ oder effektgebenden Pigmenten versehener Basislack, insbesondere Wasserbasislack, auf die Substratoberfläche aufgebracht wird, (2) die in Stufe (1) aufgebrachte Basislackschicht bei Temperaturen zwischen 15°C und 100°C, vorzugsweise zwischen 20°C und 85°C, getrocknet wird, (3) auf die in Stufe (2) getrocknete Basislackschicht der transparente Beschichtungsstoff als Klarlackschicht aufgebracht wird und anschließend (4) Basislackschicht und Klarlackschicht zusammen eingebrannt werden und zwar vorzugsweise bei Temperaturen zwischen 120°C und 180°C und in einer Zeitspanne von 5 min. bis 60 min.

Als Substrate kommen alle zu lackierenden Oberflächen von Gegenständen in Betracht, die einer Härtung der hierauf befindlichen Lackschichten unter Anwendung von Hitze zugänglich sind, das sind z. B. Gegenstände aus Metallen, Kunststoffen, Holz, Keramik, Stein, Textil, Faserverbunden, Leder, Glas, Glasfasern, Glas- und Steinwolle oder mineral- und harzgebundene Baustoffen, wie Gips- und Zementplatten oder Dachziegel. Demnach ist der Beschichtungsstoff, insbesondere als Klarlack, für Anwendungen in der Automobillackierung der Lackierung von Möbeln und der industrielle Lackierung, inklusive Coil Coating und Container Coating, in hohem Maße geeignet. Im Rahmen der industriellen Lackierungen eignet er sich für die Lackierung praktisch aller Teile für den privaten oder industriellen Gebrauch wie Radiatoren, Haushaltsgeräte, Kleinteile aus Metall, Radkappen oder Felgen.

Mit dem Beschichtungsstoff, insbesondere dem Klarlack, können insbesondere auch grundierte oder nicht grundierte sowie gegebenenfalls mit einer Basislackschicht beschichte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert

werden. Die zu lackierenden Kunststoffe können selbstverständlich auch Polymerblends, modifizierte Kunststoffe oder faserverstärkte Kunststoffe sein. Er kann auch für die Beschichtung von üblicherweise im Fahrzeugbau, insbesondere Kraftfahrzeugbau, eingesetzten Kunststoffe zum Einsatz kommen. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen werden.

Bei den mit Hilfe des Beschichtungsstoffs, insbesondere des Klarlacks, hergestellten Mehrschichtlackierungen ist keine Delamination wegen mangelhafter Zwischenschichthaftung zu beobachten. Ihr Verlauf und ihre optischen Eigenschaften sind hervorragend. Auch neigen sie nicht mehr zum Weißanlaufen nach Schwitzwasserbelastung.

## Herstellbeispiele

Folgend werden Herstellungsbeispiele für einen Beschichtungsstoff unter Verwendung des erfindungsgemäßen Thixotropierungsmittels und zwar von Harnstoffen auf Basis 1,3- oder 1,4-Bis(isocyanatomethyl)cyclohexan, gegeben.

### Beispiel 1

### Herstellung einer Polyacrylatharzlösung

In einem Stahlkessel mit Monomerzulauf, Initiatorzulauf, Thermometer, Ölheizung und Rückflußkühler wurden 878 Teile eines handelsüblichen aromatischen Lösemittels mit einem Siedebereich von 158°C - 172°C vorgelegt und auf 140°C aufgeheizt. Dann wurde eine Mischung (a) aus 87 Teilen des aromatischen Lösemittels und 87 Teilen t-Butylperoctoat in einer solchen Geschwindigkeit unter Rühren zugegeben, daß die Zugabe der Mischung (a) nach 4,75 Stunden abgeschlossen war. 15 min. nach Beginn der Zugabe der Mischung (a) wurde eine Mischung (b) bestehend aus 630 Teilen t-Butylacrylat, 217 Teilen n-Butylmethacrylat, 72 Teilen i-Butylmethacrylat, 116 Teilen Styrol, 326 Teilen Hydroxypropylmethacrylat und 87 Teilen Butandiol-1,4-monoacrylat in einer solchen Geschwindigkeit zu der Reaktionsmischung gegeben, daß die Zugabe der Mischung (b) nach 4 Stunden abgeschlossen war. Nach Abschluß der Zugabe der Mischung (a) wurde das Reaktionsgemisch noch 2 Stunden bei 140°C gehalten und anschließend auf Raumtemperatur abgekühlt. Die erhaltene Acrylatharzlösung wies einen Feststoffgehalt von 62,3% (1h, 130°C; Umluftofen), eine Viskosität von 7,2 dPas (ICI-Platte-Kegel-Viskosimeter, 23°C), eine Säurezahl von 4,9 und eine Hydroxylzahl von 111, jeweils bezogen auf den Feststoffgehalt, auf

### Beispiel 2

### Herstellung einer Thixotropierungsmittel enthaltenden Polyacrylatharzlösung

In den 2,51-Rührbehälters eines Dissolvers mit einer Dissolverscheibe des Durchmessers von 90 mm wurden 1850 g der in Beispiel 1 beschriebenen Acrylatharzlösung, 130 g n-Butylacetat und 61 g n-Hexylamin in der angegebenen Reihenfolge eingewogen. In ein Vorlagegefäß wurden 130g n-Butylacetat und 58 g 1,4-Bis(isocyanatomethyl) cyclohexan eingewogen und vorgemischt. Es wurde bei 1400 U/min. dissolvert, und der Inhalt der Vorlage wurde innerhalb von 10 min. gleichmäßig in den Rührbehälter dosiert. Danach wurde weitere 20 min bei 1400 U/min. dissolvert. Es entstand eine thixotrope Dispersion mit einem nichtflüchtigen Anteil von 50%, davon 5% Harnstoffteilchen.

### Beispiel 3

### Herstellung eines Klarlacks

In ein 21-Rührgefäß wurden in der angegebenen Reihenfolge eingewogen und durch Rühren vermischt: 532,5 g der in Beispiel 1 beschriebenen Acrylatharzlösung, 360 g der in Beispiel 2 beschriebenen thixotropen Dispersion, 342 g eines handelsüblichen butanolveretherten Melaminharzes, 80%-ig gelöst in n-Butanol, 18 g eines handelsüblichen UV-Absorbers auf Basis eines Benztriazols gelöst in 45 g Xylol, 15 g eines handelsüblichen Radikalfängers auf Basis eines sterisch gehinderten Piperidinderivates gelöst in 30 g Xylol, 15 g eines handelsüblichen modifizierten Polysiloxans als Verlaufmittel, 60 g n-Butanol und 91,5 g des in Beispiel 1 beschriebenen aromatischen Lösemittels.

Der resultierende erfindungsgemäße Klarlack zeigte ein ausgeprägtes strukturviskoses Fließverhalten, welches sich ausgesprochen günstig auf die Applikationseigenschaften und den Verlauf des Klarlacks auswirkte. Die mit Hilfe des erfindungsgemäßen Klarlacks hergestellten Klarlackierungen wiesen hervorragende optische Eigenschaften auf und waren in hohem Maße für die Herstellung farb- und/oder effektgebender Mehrschichtlackierungen nach dem Naß-in-naß-Verfahren geeignet.

## Patentansprüche

**1.** Thixotropierungsmittel, erhältlich aus der Umsetzung einer isocyanatgruppenhaltigen Komponente mit einem, primären oder sekundären Amin oder einer Mischung solcher Amine und/oder Wasser, **dadurch gekennzeichnet, daß** die isocyanatgruppenhaltige Komponente

Ia) zumindest ein Isocyanat mit mindestens einer Diisocyanat-Struktureinheit, welche

i) eine ungesättigte bzw. aromatische oder nicht aromatische Ringstruktur mit 5 - 10 Ringatomen und
ii) zwei an die Ringstruktur gebundene Isocyanatgruppen aufweist, wobei
iii) im Falle einer nicht aromatischen Ringstruktur

a) beide Isocyanatgruppen über lineares $C_1$-$C_9$-Alkyl und/oder lineares $C_2$-$C_{10}$-Etheralkyl oder
b) eine Isocyanatgruppe direkt und die andere über lineares $C_2$-$C_9$-Alkyl und/oder lineares $C_2$-$C_{10}$-Etheralkyl und

iv) im Fall einer ungesättigten oder aromatischen Ringstruktur mindestens eine der beiden Isocyanatgruppen über lineares $C_2$-$C_9$-Alkyl und/oder lineares $C_2$-$C_{10}$-Etheralkyl,wobei beide Reste keine benzylischen Wasserstoffatome aufweisen, mit der Ringstruktur verbunden ist oder sind;

und/oder

Ib) zumindest ein Oligomer dieses Isocyanats Ia), wobei 2 bis 10 Monomereinheiten des isocyanats la) umgesetzt werden, insbesondere ein Trimer
und/oder

Ic) mindestens ein partiell blockiertes Isocyanat I a) und/oder mindestens ein partiell blockiertes Oligomeren Ib)

enthält oder hieraus besteht.

**2.** Thixotropierungsmittel nach Anspruch 1, **dadurch gekennzeichnet, daß** es erhältlich ist durch Umsetzung der isocyanatgruppenhaltigen Komponente mit einem aliphatischen, primären Monoamin.

**3.** Thixotropierungmittel nach Anspruch 1 oder 2, **dadurch gekennzeichnet, daß** die isocyanatgruppenhaltige Komponente die Verbindungen Ia und/oder Ib enthält oder hieraus besteht.

**4.** Verwendung eines Thixotropierungsmittels nach einem der Ansprüche 1 bis 3 zur Herstellung eines Beschichtungsstoffs, vorzusweise eines nichtwäßrigen Beschichtungsstoffs, höchstvorzugsweise eines nichtwäßrigen Glanzklarlacks.

**5.** Verwendung nach Anspruch 4, wobei der Beschichtungsstoff ein Bindemittel, vorzugsweise ein Polyacrylatharz, ein Vernetzungsmittel, vorzugsweise ausgewählt aus der Gruppe bestehend aus Polyisocyanaten, Polyepoxiden, blockierten Polyisocyanaten, Tris(alkoxycarbonylamino)triazinen, Aminoplastharzen, beta-Hydroxyalkylamiden, Siloxanen und Polyanhydriden sowie Mischungen dieser Verbindungen, das Thixotropierungsmittel gemäß einem der Ansprüche 1 bis 3, und, optional, Lackadditive enthält.

**6.** Verfahren zur Herstellung eines Thixotropierungsmittels gemäß einem der Ansprüche 1 bis 3, wobei

a) das primäre oder sekundäre Amin oder eine Mischung solcher Amine und/oder Wasser zu einer Bindemittellösung, vorzugsweise einer nichtwäßrigen Polyacrylatlösung, zugegeben wird und
b) die isocyanatgruppenhaltige Komponente oder einer Lösung dieser Komponente zu der in Stufe a) erhaltenen Lösung zugegeben wird.

**7.** Verfahren nach Anspruch 6, wobei die Stufen a) und/oder b) in einem Dissolver durchgeführt werden.

## Claims

1. Thixotropic agent obtainable from the reaction of an isocyanato-containing component with a primary or a secondary amine or mixture of such amines and/or water, **characterized in that** the isocyanato-containing component comprises or consists

    Ia) of at least one isocyanate containing at least one diisocyanate structural unit which

    i) has an unsaturated or aromatic or nonaromatic ring structure containing 5-10 ring atoms and
    ii) has two isocyanate groups attached to the ring structure, where
    iii) in the case of a nonaromatic ring structure

    a) both isocyanate groups are attached to the ring structure via linear $C_1$-$C_9$ alkyl and/or linear $C_2$-$C_{10}$ ether alkyl, or
    b) one isocyanate group is attached directly to the ring structure and the other is attached via linear $C_2$-$C_9$ alkyl and/or linear $C_2$-$C_{10}$ ether alkyl, and

    iv) in the case of an unsaturated or aromatic ring structure at least one of the two isocyanate groups is attached to the ring structure via linear $C_2$-$C_9$ alkyl and/or linear $C_2$-$C_{10}$ ether alkyl, both of the radicals containing no benzylic hydrogen atoms;

    and/or

    Ib) of at least one oligomer of this isocyanate Ia), from 2 to 10 monomer units of the isocyanate Ia) being reacted, especially a trimer;
    and/or

    Ic) of at least one partially blocked isocyanate Ia) and/or of at least one partially blocked oligomer Ib).

2. Thixotropic agent according to Claim 1, **characterized in that** it is obtainable by reacting the isocyanato-containing component with an aliphatic, primary monoamine.

3. Thixotropic agent according to Claim 1 or 2, **characterized in that** the isocyanato-containing component comprises or consists of the compounds Ia and/or Ib.

4. Use of a thixotropic agent according to one of Claims 1 to 3 to prepare a coating material, preferably a nonaqueous coating material, most preferably a nonaqueous gloss clearcoat material.

5. Use according to Claim 4, wherein the coating material comprises a binder, preferably a polyacrylate resin, a crosslinking agent, preferably selected from the group consisting of polyisocyanates, polyepoxides, block polyisocyanates, tris(alkoxycarbonylamino)triazines, amino resins, beta-hydroxyalkylamides, siloxanes and polyanhydrides, and mixtures of these compounds, the thixotropic agent of one of Claims 1 to 3, and, optionally, coatings additives.

6. Process for preparing a thixotropic agent according to one of Claims 1 to 3, wherein

    a) the primary or secondary amine or a mixture of such amines and/or water is added to a binder solution, preferably a nonaqueous polyacrylate solution, and
    b) the isocyanato-containing component or a solution of this component is added to the solution obtained in step a).

7. Process according to Claim 6, wherein stages a) and/or b) are conducted in a dissolver.

## Revendications

1. Agent de thixotropie pouvant être obtenu par la réaction d'un composant contenant des groupes isocyanate avec une amine primaire ou secondaire ou un mélange de telles amines et/ou de l'eau, **caractérisé en ce que** le

composant contenant des groupes isocyanate contient

Ia) au moins un isocyanate comportant au moins une unité structurale diisocyanate qui

i) présente une structure cyclique insaturée ou aromatique ou non aromatique ayant de 5 à 10 atomes formant le cycle et
ii) deux groupes isocyanate liés à la structure cyclique,
iii) dans le cas d'une structure cyclique non aromatique

a) les deux groupes isocyanates étant liés par un groupe alkyle en $C_1$-$C_9$ linéaire et/ou un groupe étheralkyle en $C_2$-$C_{10}$ linéaire ou
b) un groupe isocyanate étant lié directement à la structure cyclique, et l'autre étant lié la structure cyclique par un groupe alkyle en $C_2$-$C_9$ linéaire et/ou un groupe étheralkyle en $C_2$-$C_{10}$ linéaire et

iv) dans le cas d'une structure cyclique insaturée ou aromatique, au moins un des deux groupes isocyanate étant lié à la structure cyclique par un groupe alkyle en $C_2$-$C_9$ linéaire et/ou un groupe étheralkyle en $C_2$-$C_{10}$ linéaire, les deux radicaux ne comportant pas d'atomes d'hydrogène benzyliques ;

et/ou

Ib) au moins un oligomère de cet isocyanate Ia), 2 à 10 motifs monomères de l'isocyanate Ia) étant mis en réaction, en particulier un trimère
et/ou

Ic) au moins un isocyanate Ia) partiellement bloqué et/ou au moins un oligomère Ib) partiellement bloqué

ou consiste en ceux-ci.

**2.** Agent de thixotropie selon la revendication 1, **caractérisé en ce qu'**il peut être obtenu par réaction du composant contenant des groupes isocyanate avec une monoamine primaire aliphatique.

**3.** Agent de thixotropie selon la revendication 1 ou 2, **caractérisé en ce que** le composant contenant des groupes isocyanate contient les composés Ia et/ou Ib ou consiste en ceux-ci.

**4.** Utilisation d'un agent de thixotropie selon l'une quelconque des revendications 1 à 3, pour la préparation d'une matière de revêtement, de préférence d'une matière de revêtement non aqueuse, de façon tout particulièrement préférée d'un vernis brillant non aqueux.

**5.** Utilisation selon la revendication 4, dans laquelle la matière de revêtement contient un liant, de préférence une résine polyacrylate, un agent de réticulation, de préférence choisi dans le groupe constitué par des polyisocyanates, des polyépoxydes, des polyisocyanates bloqués, des tris(alcoxycarbonylamino)triazines, des aminoplastes, des β-hydroxyalkylamides, des siloxanes et des polyanhydrides, ainsi que des mélanges de ces composés, l'agent de thixotropie selon l'une quelconque des revendications 1 à 3 et, si on le désire, des additifs pour peintures.

**6.** Procédé pour la préparation d'un agent de thixotropie selon l'une quelconque des revendications 1 à 3, dans lequel

a) on ajoute l'amine primaire ou secondaire ou un mélange de telles amines et/ou de l'eau à une solution de liant, de préférence à une solution non aqueuse de polyacrylate et
b) on ajoute le composant contenant des groupes isocyanate ou une solution de ce composant à la solution obtenue dans l'étape a).

**7.** Procédé selon la revendication 6, dans lequel les étapes a) et/ou b) sont effectuées dans un dissolveur.